# EUROPÄISCHE PATENTSCHRIFT

(11) **EP 2 099 666 B1**
(45) Veröffentlichungstag und Bekanntmachung des Hinweises auf die Patenterteilung: **23.06.2010**
(21) Anmeldenummer: 07846816.2
(22) Anmeldetag: 26.11.2007
(51) Int. Cl.: B60T 13/68, B60T 17/18, B60T 17/04

(54) **FESTSTELLBREMSVORRICHTUNG MIT EINER FESTSTELLBREMSE-NOTLÖSEEINRICHTUNG UND -VERFAHREN**
PARKING BRAKE DEVICE COMPRISING AN EMERGENCY RELEASE DEVICE AND CORRESPONDING EMERGENCY RELEASE METHOD
DISPOSITIF DE FREIN DE STATIONNEMENT ÉQUIPÉ D'UN DISPOSITIF DE DESSERRAGE D'URGENCE ET PROCÉDÉ ASSOCIÉ

(30) Priorität: 24.11.2006 DE 102006055570
(43) Veröffentlichungstag der Anmeldung: 16.09.2009
(73) Patentinhaber: Knorr-Bremse Systeme für Nutzfahrzeuge GmbH, 80809 München (DE)
(72) Erfinder: HILBERER, Eduard, 68766 Hockenheim (DE)
(74) Vertreter: Mattusch, Gundula
(86) Internationale Anmeldenummer: PCT/EP2007/010249
(87) Internationale Veröffentlichungsnummer: WO 2008/061799

(56) Entgegenhaltungen:
- EP-A- 0 171 281
- WO-A-2005/025958
- DE-A1- 3 522 432

## Beschreibung

Die Erfindung betrifft eine Feststellbremsvorrichtung für ein pneumatisches Bremssystem eines Nutzfahrzeugs, mit einer Steuereinrichtung, über die eine Feststellbremsbetätigungseinrichtung ansteuerbar ist, um ein Feststellen und Lösen einer Feststellbremse zu bewirken, und mit einer Feststellbremse-Notlöseeinrichtung, die bei Ausfall der Feststellbremsbetätigungseinrichtung zum Lösen der Feststellbremse dient.

Weiterhin betrifft die Erfindung ein Verfahren zum Steuern einer Feststellbremsvorrichtung für ein pneumatisches Bremssystem eines Nutzfahrzeugs, mit einer Steuereinrichtung, über die eine Feststellbremsbetätigungseinrichtung angesteuert wird, um ein Feststellen und Lösen einer Feststellbremse zu bewirken, und mit einer Feststellbremse-Notlöseeinrichtung, die bei Ausfall der Feststellbremsbetätigungseinrichtung die Feststellbremse löst.

In modernen Bremssystemen werden Feststellbremsvorrichtungen eingesetzt, die zur Betätigung einer Feststellbeziehungsweise Parkbremse eines Kraftfahrzeugs dienen. So werden insbesondere zur Steuerung von Drücken in Federspeicherbremszylindern der Feststellbremse so genannte ECPB-Module (ECPB = Electronic Controlled Parking Brake) verwendet. Diese ECPB-Module umfassen üblicherweise eine Steuereinrichtung, über die eine Feststellbremsbetätigungseinrichtung und eine Feststellbremse-Notlöseeinrichtung ansteuerbar sind. Um die Feststellbremse festzustellen oder zu lösen steuert die Steuereinrichtung die Feststellbremsbetätigungseinrichtung an, die entsprechend der Ansteuerung beispielsweise eine Entlüftung der Federspeicherbremszylinder zur Feststellung der Feststellbremse und umgekehrt eine Belüftung der Federspeicherbremszylinder zum Lösen der Feststellbremse vornimmt. Bei einer derartigen Feststellbremsbetätigungseinrichtung kann der Fall auftreten, dass aufgrund einer Leckage in der Feststellbremsanlage, beispielsweise in Leitungen zu den Federspeicherbremszylindern der Feststellbremse, die Belüftung der Federspeicherbremszylinder und damit das Lösen der Feststellbremse nicht mehr vorgenommen werden kann. Die Feststellbremsbetätigungsvorrichtung ist somit nicht mehr betriebsfähig und fällt aus. Aus diesem Grund umfasst das ECPB-Modul die Feststellbremse-Notlöseeinrichtung, die bei Auftreten der Leckage von der Steuereinrichtung angesteuert wird, um eine Feststellbremse-Notlösefunktion durchzuführen und dadurch für eine Belüftung der Federspeicherbremszylinder zu sorgen, um die Feststellbremse zu lösen. Jedoch kann unter Umständen weiterhin der Fall auftreten, dass die Steuereinrichtung ausfällt, wodurch weder die Feststellbremsbetätigungseinrichtung noch die Feststellbremse-Notlöseeinrichtung zur Durchführung der Notlösefunktion ansteuerbar sind und die Feststellbremse damit generell nicht mehr gelöst werden kann. Siehe z.B. WO2005/025458 A1 vom Anmelder

Es ist daher die Aufgabe der vorliegenden Erfindung, die gattungsgemäßen Feststellbremsvorrichtungen und die gattungemäßen Verfahren zum Steuern von Feststellbremsvorrichtungen derart weiterzubilden, dass die Notlösefunktion zum Lösen der Feststellbremse auch bei Ausfall der Steuereinrichtung zur Verfügung gestellt werden kann.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die erfindungsgemäße Feststellbremsvorrichtung baut auf dem gattungsgemäßen Stand der Technik dadurch auf, dass die Feststellbremse-Notlöseeinrichtung unabhängig von der Steuereinrichtung ansteuerbar ist. Somit kann selbst dann die Notlösefunktion durch die Feststellbremse-Notlöseeinrichtung ausgeführt werden, wenn die Steuereinrichtung ausfällt. Dadurch wird sichergestellt, dass die Notlösefunktion sowohl bei Ausfall der Feststellbremsbetätigungseinrichtung als auch der Steuereinrichtung ausgeführt werden kann.

Die erfindungsgemäße Feststellbremsvorrichtung kann in vorteilhafter Weise derart weitergebildet werden, dass die Feststellbremse-Notlöseeinrichtung von einer Feststellbremse-Notlösesteuereinrichtung ansteuerbar, insbesondere elektrisch ansteuerbar, ist. Die Notlösefunktion kann optional durch einen mit der Feststellbremse-Notlösesteuereinrichtung gekoppelten elektrischen Notlöseschalter durch den Fahrer ausgelöst werden. Beispielsweise kann dieser Notlöseschalter in einem Feststellbremsschalter untergebracht sein. Die Feststellbremse-Notlösesteuereinrichtung ist beispielsweise eine separate und unabhängige Steuereinrichtung mit eigner ECU, Speicher etc., die vorzugsweise ebenso in das ECPB-Modul integriert ist. Die Feststellbremse-Notlösesteuereinrichtung kann beispielsweise mit der Steuereinrichtung gekoppelt sein, um Rückschlüsse über deren Zustand ziehen und dadurch einen möglichen Ausfall der Steuereinrichtung ermitteln zu können.

Alternativ kann die erfindungsgemäße Feststellbremsvorrichtung so realisiert werden, dass die Feststellbremse-Notlöseeinrichtung pneumatisch oder mechanisch ansteuerbar ist. So kann die Feststellbremse-Notlöseeinrichtung beispielsweise mechanisch durch ein Stellglied betätigt werden, um die Feststellbremse zu lösen. Ebenso kann die Feststellbremse-Notlöseeinrichtung aber auch zur pneumatischen Ansteuerung ausgelegt sein.

Vorzugsweise wird die erfindungsgemäße Feststellbremsvorrichtung derart realisiert, dass die Feststellbremse-Notlöseeinrichtung ein bistabiles Magnetventil umfasst, dessen Stellung durch Umpolung eines ihm zugeführten Stroms von der Feststellbremse-Notlösesteuereinrichtung variierbar ist. Insbesondere die Verwendung von bistabilden Magnetventilen eignet sich besonders im Zusammenhang mit der elektrischen Ansteuerung durch die Feststellbremse-Notlösesteuereinrichtung, da die Ansteuerung ohne großen Aufwand realisiert werden kann. Die Ansteuerung kann somit direkt auf elektrischem Wege von der Feststellbremse-Notlösesteuereinrichtung vorgenommen werden.

Das erfindungsgemäße Verfahren zum Steuern einer Feststellbremsvorrichtung baut auf dem gattungsgemäßen Stand der Technik dadurch auf, dass die Feststellbremse-Notlöseeinrichtung unabhängig von der Steuereinrichtung angesteuert wird. Dadurch ergeben sich die im Zusammenhang mit der erfindungsgemäßen Feststellbremsvorrichtung erläuterten Eigenschaften und Vorteile in gleicher oder ähnlicher Weise, weshalb zur Vermeidung von Wiederholungen auf die entsprechenden Ausführungen im Zusammenhang mit der erfindungsgemäßen Feststellbremsvorrichtung verwiesen wird.

Gleiches gilt sinngemäß für die folgenden bevorzugten Ausführungsformen des erfindungsgemäßen Verfahrens, wobei zur Vermeidung von Wiederholungen auch diesbezüglich auf die entsprechenden Ausführungen im Zusammenhang mit der erfindungsgemäßen Feststellbremsvorrichtung verwiesen wird.

Das erfindungsgemäße Verfahren kann in vorteilhafter Weise derart weitergebildet sein, dass die Feststellbremse-Notlöseeinrichtung von einer Feststellbremse-Notlösesteuereinrichtung angesteuert, insbesondere elektrisch angesteuert, wird.

Alternativ kann das erfindungsgemäße Verfahren so umgesetzt werden, dass die Feststellbremse-Notlöseeinrichtung pneumatisch oder mechanisch angesteuert wird.

Vorzugsweise wird das erfindungsgemäße Verfahren derart verwirklicht, dass die Feststellbremse-Notlöseeinrichtung ein bistabiles Magnetventil umfasst, dessen Stellung durch Umpolung eines ihm zugeführten Stroms von der Feststellbremse-Notlösesteuereinrichtung variiert wird.

Bevorzugte Ausführungsformen der Erfindung werden nachfolgend anhand der Figuren beispielhaft erläutert.

### Es zeigen:

- Figur 1: eine vereinfachte Darstellung der erfindungsgemäßen Feststellbremsvorrichtung in einem nur teilweise dargestellten Bremssystem; und
- Figur 2: eine detaillierte Darstellung der erfindungsgemäßen Feststellbremsvorrichtung.

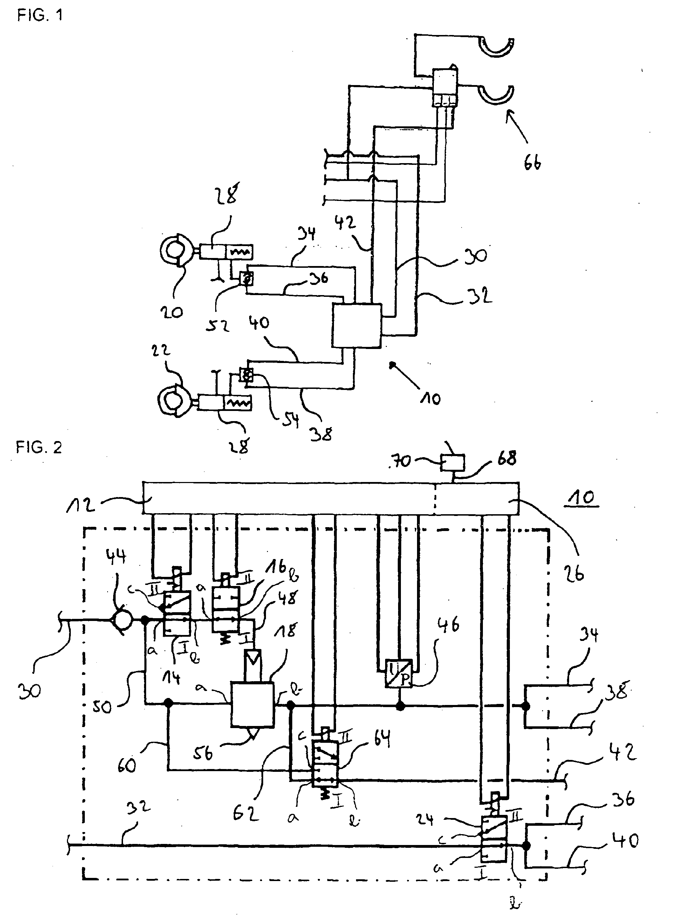

Figur 1 zeigt eine vereinfachte Darstellung der erfindungsgemäßen Feststellbremsvorrichtung 10 in einem nur teilweise dargestellten Bremssystem eines Kraftfahrzeugs. Weiterhin ist die erfindungsgemäße Feststellbremsvorrichtung 10 in Figur 2 in einer detaillierten Darstellung gezeigt. Die Feststellbremsvorrichtung 10 umfasst unter anderem eine Steuereinrichtung 12 zur Ansteuerung einer Feststellbremsbetätigungseinrichtung 14, 16 und 18, die zum Lösen und Feststellen einer linken und rechten Feststellbremse 20, 22 des Kraftfahrzeugs dient und worauf nachstehend genauer eingegangen wird. Darüber hinaus umfasst die Feststellbremsvorrichtung 10 eine Feststellbremse-Notlösesteuereinrichtung 26 zur Ansteuerung einer Feststellbremse-Notlöseeinrichtung 24, die bei Ausfall der Steuereinrichtung 12 und/oder der Feststellbremsbetätigungseinrichtung 14, 16 und 18 zum Lösen der linken und rechten Feststellbremse 20, 22 dient. Beide Steuereinrichtungen 12 und 26 sind voneinander weitgehend unabhängig, insbesondere was die Funktionstüchtigkeit der einen beim Ausfall der anderen betrifft, und umfassen jeweils dem Fachmann bekannte Komponenten wie beispielsweise eine ECU oder einen Controller mit einem Prozessor, einen Speicher, etc. Darüber hinaus ist die Feststellbremse-Notlösesteuereinrichtung 26 mit der Steuereinrichtung 12 gekoppelt, um Rückschlüsse über den Zustand der Steuereinrichtung 12 ziehen zu können und damit einen möglichen Ausfall der Steuereinrichtung 12 ermitteln zu können. Weiterhin kann die Feststellbremse-Notlösesteuereinrichtung 26 über eine elektrische Leitung 68 mit einem Notlöseschalter 70 gekoppelt sein, der zum manuellen Lösen der linken und rechten Feststellbremse 20, 22, beispielsweise durch einen Fahrer des Kraftfahrzeugs, dient. Ebenso können die Steuereinrichtungen 12, 26 gegenseitige Überwachungs- und Back-up-Funktionen wahrnehmen. Es ist auch möglich die Feststellbremse-Notlösesteuereinrichtung in eine andere Steuereinheit des Fahrzeugs zu integrieren, z. B. eine Steuereinheit eines Elektronischen Bremssystems (EBS).

Die Feststellbremsbetätigungseinrichtung 14, 16, 18 wird durch ein bistabiles 3/2-Wegeventil 14, ein 2/2-Wegeventil 16 und ein Relaisventil 18 gebildet, wobei die Steuereinrichtung 12 zur Ansteuerung mit dem 3/2-Wegeventil 14 und dem 2/2-Wegeventil 16 über elektrische Leitungen gekoppelt ist. Das bistabile 3/2-Wegeventil 14 ist mit einem ersten Anschluss a über ein Rückschlagventil 44 mit einer ersten Druckmittelzuführleitung 30 des Bremssystems gekoppelt. Die erste Druckmittelzuführleitung 30 kann beispielsweise mit einer nicht dargestellten Druckluftaufbereitungsanlage (EAC-Modul) zur Druckluftbeschaffung gekoppelt sein. Im dargestellten Fall öffnet das Rückschlagventil 44 bei einer Druckmittelströmung in Richtung des bistabilen 3/2-Wegeventils 14 und schließt bei entgegengesetzter Strömungsrichtung des Druckmittels. Weiterhin ist das bistabile 3/2-Wegeventil 14 mit einem zweiten Anschluss b mit einem ersten Anschluss a eines 2/2-Wegeventils 16 gekoppelt. In der in Figur 2 dargestellten Schaltstellung I des bistabilen 3/2-Wegeventil 14 sind der erste und zweite Anschluss a, b des bistabilen 3/2-Wegeventil 14 miteinander verbunden. In einer Schaltstellung II des bistabilen 3/2-Wegeventils 14 ist der erste Anschluss a geschlossen, wobei der zweite Anschluss b des bistabilen 3/2-Wegeventils 14 über einen Ausgang (dritter Anschluss c) mit der Atmosphäre verbunden ist. Das 2/2-Wegeventil 16 verbindet in einer dargestellten Schaltstellung I dessen ersten Anschluss a mit einem zweiten Anschluss b. Hingegen sind der erste und zweite Anschluss a, b des 2/2-Wegeventils 16 in dessen Schaltstellung II geschlossen. Der zweite Anschluss des 2/2-Wegeventils 16 ist mit einem Ansteuereingang 48 eines Relaisventils 18 gekoppelt. Das bistabile 3/2-Wegeventil 14 ist durch die Steuereinrichtung 12 derart ansteuerbar, dass es bei Vorliegen einer bestimmten Polung der elektrischen Leitungen die Schaltstellung I (wie gezeigt) einnimmt. Hingegen ist das bistabile 3/2-Wegeventil 14 weiterhin so ansteuerbar, dass es die Schaltstellung II einnimmt, wenn eine Umpolung der elektrischen Leitungen durch die Steuereinrichtung 12 vorgenommen wird. Das 2/2-Wegeventil 16 nimmt in einem unbestromten Zustand die Schaltstellung I und umgekehrt in einem bestromten Zustand die Schaltstellung II ein. Zwischen dem Rückschlagventil 44 und dem bistabilen 3/2-Wegeventil 14 ist an einer Verzweigungsstelle eine Bremsleitung 50 mit der Druckmittelzuführleitung 30 gekoppelt. Die Bremsleitung 50 ist mit einem Anschuss a des Relaisventils 18 gekoppelt. Die Bremsleitung 50 verläuft von einem Anschluss b des Relaisventils 18 weiter. Darüber hinaus ist an dem Relaisventil 18 ein mit der Atmosphäre verbundener Relaisventilausgang 56 vorgesehen. In Abhängigkeit von dem Druck des Druckmittels in dem Ansteuereingang 48 stellt das Relaisventil 18 eine Verbindung zwischen dessen Anschlüssen a und b oder dem Anschluss b und dem Relaisventilausgang 56 her. Hierauf wird weiter untenstehend genauer eingegangen. Nach dem Anschluss b des Relaisventils 18 verzweigt sich die Bremsleitung 50 schließlich an einer Verzweigungsstelle in Bremsleitungen 34 und 38. Die Bremsleitungen 34 und 38 sind jeweils über ein Wechselventil 52 und 54 mit einem linken und rechten Federspeicherbremszylinder 28 der linken und rechten Feststellbremse 20, 22 gekoppelt. Darüber hinaus ist ein Drucksensor 46 zwischen dem Relaisventil 18 und der Verzweigungsstelle zu den Bremsleitungen 34, 38 zur Druckerfassung vorgesehen. Alternativ kann der Drucksensor 46 auch in einer oder beiden Bremsleitungen zwischen dem entsprechenden Wechselventil 52, 54 und Federspeicherbremszylinder 28 der jeweiligen Feststellbremse 20, 22 vorgesehen sein.

Die Feststellbremse-Notlöseeinrichtung 24, die durch ein bistabiles 3/2-Wegeventil 24 gebildet wird, ist in einer weiteren beziehungsweise zweiten Druckmittelzuführleitung 32 vorgesehen und wird, wie vorstehend erwähnt, durch die Feststellbremse-Notlösesteuereinrichtung 26 über elektrische Leitungen angesteuert. Die zweite Druckmittelzuführleitung 32 kann dabei ebenso wie die erste Druckmittelzuführleitung 30 mit einer Druckluftaufbereitungsanlage gekoppelt sein. Insbesondere ist die zweite Druckmittelzuführleitung 32 mit einem ersten Anschluss a des bistabilen 3/2-Wegeventils 24 gekoppelt, der in der gezeigten Schaltstellung I mit einem zweiten Anschluss b des bistabilen 3/2-Wegeventils 24 gekoppelt ist. Hingegen ist in einer Schaltstellung II der erste Anschluss a geschlossen, wohingegen der zweite Anschluss b des bistabilen 3/2-Wegeventils 24 über einen Ausgang (dritter Anschluss c) mit Atmosphäre verbunden ist. Bei Vorliegen einer bestimmten Polung nimmt das bistabile 3/2-Wegeventil 24 die Schaltstellung I ein. Wird eine entgegengesetzte Polung auf das bistabile 3/2-Wegeventil 24 aufgebracht, so nimmt es die Schaltstellung II ein. Der zweite Anschluss b des bistabilen 3/2-Wegeventils 24 ist über eine verzweigungsstelle mit Bremsleitungen 36 und 40 gekoppelt. Die Bremsleitungen 36 und 40 sind ebenso wie die Bremsleitungen 34 und 38 jeweils über die Wechselventile 52, 54 mit den Federspeicherbremszylindern 28 der linken und rechten Feststellbremse 20, 22 gekoppelt.

Darüber hinaus ist stromaufwärts des Relaisventils 18 eine Anhängerbremstestleitung 60 an einer Verzweigungsstelle mit der Bremsleitung 50 gekoppelt, wobei die Anhängerbremstestleitung 60 mit einem dritten Anschluss c eines 3/2-Wegeventils 64 gekoppelt ist. Weiterhin ist stromabwärts des Relaisventils 18 eine Anhängerbremstestleitung 62 an einer Verzweigungsstelle mit der Bremsleitung 50 gekoppelt, wobei die Anhängerbremstestleitung 62 mit einem ersten Anschluss a des 3/2-Wegeventils 64 gekoppelt ist. In einer Schaltstellung I des 3/2-Wegeventils 64 ist der erste Anschluss a mit einem zweiten Anschluss b verbunden, der über eine Anhängerbremstestleitung 42 mit einer in Figur 1 gezeigten Steuerventileinheit einer Anhängerbremse 66 gekoppelt ist. Hingegen ist der dritte Anschluss c in der Schaltstellung I des 3/2-Wegeventils 64 geschlossen. In einer Schaltstellung II ist der erste Anschluss a geschlossen, wohingegen die dritte und zweite Anschluss c, b des 3/2-Wegeventils 64 miteinander verbunden sind. Wie auch die vorstehend genannten Wegeventile 14 und 16 ist auch das 3/2-Wegeventil 64 mit der Steuereinrichtung 12 über elektrische Leitungen gekoppelt.
Die Anhängerbremstestleitung 42 und das 3/2-Wegeventil 64 dienen insbesondere dazu, während eines Entlüftungsbetriebs der Feststellbremsen 20, 22 eine Bremswirkung der Anhängerbremse 66 mittels geeigneter Ansteuerung des 3/2-Wegeventils 64 durch die Steuereinrichtung 12 aufzuheben. Dadurch kann überprüft werden, ob die Feststellbremsen 20, 22 auch ohne Bremswirkung der Anhängerbremse 66 ausreichend Bremswirkung für das Kraftfahrzeug mit einem daran gekoppelten Anhänger zur Verfügung stellen können.

Im Folgenden wird zunächst der Löse- und Feststellbetrieb der Feststellbremsen 20, 22 beschrieben. Anschließend wird auf den Notlösebetrieb der Feststellbremsen 20, 22 eingegangen.

Bei dem Löse- und Feststellbetrieb wird das 3/2-Wegeventil 24 durch die Feststellbremse-Notlösesteuereinrichtung 26 derart angesteuert, dass es seine Schaltstellung II einnimmt. Dadurch wird eine Druckmittelzufuhr durch die zweite Druckmittelzuführleitung 32 unterbunden. Die Notbremsleitungen 36 und 40 sind daher über den Anschluss c des 3/2-Wegeventils 24 mit Atmosphäre verbunden. Dabei wird eine Entlüftung der Bremsleitungen 34, 38 durch die jeweiligen Wechselventile 52, 54 unterbunden.

Beim Lösebetrieb der Feststellbremsen 20, 22 ist es erforderlich, die Federspeicherbremszylinder 28 der jeweiligen Feststellbremse 20, 22 zu belüften, um deren Bremswirkung aufzuheben. Damit die von der ersten Druckmittelzuführleitung 30 zur Verfügung gestellte Druckluft die Federspeicherbremszylinder 28 der Feststellbremsen 20, 22 erreichen kann, werden das bistabile 3/2-Wegeventil 14 und das 2/2-Wegeventil 16 in deren Schaltstellung I durch Ansteuerung mittels der Steuereinrichtung 12 geschaltet. Das 2/2-Wegeventil 16 kann jedoch zur Einstellung der Druckmittelströmung in den Ansteuereingang 48 des Relaisventils 18 zwischen den Schaltstellungen I und II abwechselnd hin- und her geschaltet werden. Dadurch verbindet das Relaisventil 18 dessen Anschlüsse a und b entsprechend der Einstellung der Druckmittelströmung in den Ansteuereingang 48 mit ansteigendem Druckmittelströmungsdurchsatz miteinander. Dadurch wird ein stetiges beziehungsweise kontinuierliches oder gestuftes Abklingen der Bremswirkung der Feststellbremsen 20, 22 bewirkt. Das Druckmittel von der Bremsleitung 50 kann somit durch das Relaisventil 18 zu den Bremsleitungen 34 und 38 strömen. Über die Bremsleitungen 34, 38 erreicht das Druckmittel jeweils die Wechselventile 52, 54 und anschließend die Federspeicherbremszylinder 28 der entsprechenden linken und rechten Feststellbremse 20, 22, wodurch die Bremswirkung der Feststellbremsen 20, 22 auf stetige Weise aufgehoben wird.

Im Feststellbetrieb der Feststellbremsen 20, 22 steuert die Steuereinrichtung 12 die Wegeventile 14 und 16 derart an, dass das bistabile 3/2-Wegeventil dessen Schaltstellung II einnimmt und das 2/2-Wegeventil 16 dessen Schaltstellung I einnimmt. Somit strömt die in dem Ansteuereingang 48 befindliche Druckluft zurück durch das 2/2-Wegeventil 16 und anschließend über den Ausgang (Anschluss c) des 3/2-Wegeventils 14 in die Atmosphäre. Dadurch trennt das Relaisventil 18 die Verbindung zwischen dessen Anschlüssen a und b, verbindet jedoch den Anschluss b mit dem mit Atmosphäre verbundenen Relaisventilsausgang 56. Dadurch sind der stromabwärtige Teil der Bremsleitung 50 und somit auch die Bremsleitungen 34 und 38 über den Relaisventilsausgang 56 mit Atmosphäre verbunden und werden entlüftet. Dementsprechend werden die Federspeicherbremszylinder 28 der Feststellbremsen 20, 22 entlüftet, wodurch eine Bremswirkung der Feststellbremsen 20, 22 hergestellt wird.

Der Notlösebetrieb des Feststellbremse-Notlöseeinrichtung 24 ist dann erforderlich, wenn die Feststellbremsen 20, 22 durch die Feststellbremsbetätigungseinrichtung 14, 16, 18 nicht mehr gelöst werden können. Dieser Fall tritt beispielsweise dann auf, wenn eine Leckage in den Bremsleitungen 50, 34 oder 38 auftritt. Durch die Leckage wird ein Druck in der Bremsleitung 50 während des Lösebetriebs der Feststellbremsen 20, 22 nicht in dem Maße aufgebaut, wie dies in der Regel der Fall sein sollte. Die Steuereinrichtung 12 kann durch den Drucksensor 46 beispielsweise anhand eines von dem Drucksensor 46 gelieferten Druckgradienten auf eine Leckage schließen. In diesem Fall kommuniziert die Steuereinrichtung 12 mit der Feststellbremse-Notlösesteuereinrichtung 26, die dann die erforderlichen Maßnahmen, den Notlösebetrieb, ausführt wie nachstehend erläutert wird. Im Hinblick auf einen Totalausfall der Steuereinrichtung 12 ist es sinnvoll, das von dem Drucksensor 46 gelieferte Signal von der Steuereinrichtung 12 und die Feststellbremse-Notlösesteuereinrichtung 26 durchzuschleifen oder letzte direkt mit dem Signal des Drucksensors zu versorgen. Bei Ausfall der Steuereinrichtung 12 kann die Feststellbremsbetätigungseinrichtung 14, 16, 18 nicht mehr betätigt werden, so dass eine Entlüftung der Feststellbremsen 20, 22 allgemein nicht mehr möglich ist. Der Ausfall der Steuereinrichtung 12 kann durch die Kopplung mit der Feststellbremse-Notlösesteuereinrichtung 26 ermittelt werden. In beiden Fällen, d.h. sowohl bei Vorliegen der Leckage als auch bei Ausfall der Steuereinrichtung 12, steuert die Feststellbremse-Notlösesteuereinrichtung 26 das 3/2-Wegeventil 24 derart an, dass es seine Schaltstellung I einnimmt und die Feststellbremsen 20, 22 über die Notbremsleitungen 36, 40 mit der zweiten Druckmittelzuführleitung 32 koppelt sind. Dadurch wird eine Belüftung des jeweiligen Federspeicherbremszylinders 28 bewirkt, wodurch die Feststellbremsen 20, 22 unabhängig von der Funktionstüchtigkeit der Steuereinrichtung 12 und/oder der Feststellbremsbetätigungseinrichtung 14, 16, 18 belüftet werden können. Alternativ kann die Belüftung des jeweiligen Federspeicherbremszylinders 28 auch manuell durch den Notlöseschalter 70 vorgenommen werden, der durch den Fahrer des Kraftfahrzeugs bei Vorliegen der Leckage als auch bei Ausfall der Steuereinrichtung 12 betätigt wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Feststellbremsvorrichtung
- 12: Steuereinrichtung
- 14: 3/2-Wegeventil
- 16: 2/2-Wegeventil
- 18: Relaisventil
- 20: linke Feststellbremse
- 22: rechte Feststellbremse
- 24: 3/2-Wegeventil
- 26: Feststellbremse-Notlösesteuereinrichtung
- 28: Federspeicherbremszylinder
- 30: erste Druckmittelzuführleitung
- 32: zweite Druckmittelzuführleitung
- 34: Bremsleitung für linke Feststellbremse
- 36: Notbremsleitung für linke Feststellbremse
- 38: Bremsleitung für rechte Feststellbremse
- 40: Notbremsleitung für rechte Feststellbremse
- 42: Anhängerbremstestleitung
- 44: Rückschlagventil
- 46: Drucksensor
- 48: Ansteuereingang
- 50: Bremsleitung
- 52: Wechselventil
- 54: Wechselventil
- 56: Relaisventilausgang
- 60: Anhängerbremstestleitung
- 62: Anhängerbremstestleitung
- 64: 3/2-Wegeventil
- 66: Anhängerbremse
- 68: elektrische Leitung
- 70: Notlöseschalter
- a, b, c: Anschlüsse der Wegeventile und des Relaisventils
- I, II: Schaltstellungen der Wegeventile

## Patentansprüche

1. Feststellbremsvorrichtung (10) für ein pneumatisches Bremssystem eines Nutzfahrzeugs mit einer Steuereinrichtung (12), über die eine Feststellbremsbetätigungseinrichtung (14, 16, 18) ansteuerbar ist, um ein Feststellen und Lösen einer Feststellbremse (20, 22) zu bewirken, und mit einer Feststellbremse-Notlöseeinrichtung (24), die bei Ausfall der Feststellbremsbetätigungseinrichtung (14, 16, 18) zum Lösen der Feststellbremse (20, 22) dient, **dadurch gekennzeichnet, dass** die Feststellbremse-Notlöseeinrichtung (24) unabhängig von der Steuereinrichtung (12) ansteuerbar ist.

2. Feststellbremsvorrichtung (10) nach Anspruch 1, **dadurch gekennzeichnet, dass** die Feststellbremse-Notlöseeinrichtung (24) von einer Feststellbremse-Notlösesteuereinrichtung (26) ansteuerbar, insbesondere elektrisch ansteuerbar, ist.

3. Feststellbremsvorrichtung (10) nach Anspruch 1, **dadurch gekennzeichnet, dass** die Feststellbremse-Notlöseeinrichtung (24) pneumatisch oder mechanisch ansteuerbar ist.

4. Feststellbremsvorrichtung (10) nach Anspruch 2, **dadurch gekennzeichnet, dass** die Feststellbremse-Notlöseeinrichtung (24) ein bistabiles Magnetventil (24) umfasst, dessen Stellung durch Umpolung eines ihm zugeführten Stroms von der Feststellbremse-Notlösesteuereinrichtung (26) variierbar ist.

5. Verfahren zum Steuern einer Feststellbremsvorrichtung (10) für ein pneumatisches Bremssystem eines Nutzfahrzeugs mit einer Steuereinrichtung (12), über die eine Feststellbremsbetätigungseinrichtung (14, 16, 18) angesteuert wird, um ein Feststellen und Lösen einer Feststellbremse (20, 22) zu bewirken, und mit einer Feststellbremse-Notlöseeinrichtung (24), die bei Ausfall der Feststellbremsbetätigungseinrichtung (14, 16, 18) die Feststellbremse (20, 22) löst, **dadurch gekennzeichnet, dass** die Feststellbremse-Notlöseeinrichtung (24) unabhängig von der Steuereinrichtung (12) angesteuert wird.

6. Verfahren nach Anspruch 5, **dadurch gekennzeichnet, dass** die Feststellbremse-Notlöseeinrichtung (24) von einer Feststellbremse-Notlösesteuereinrichtung (26) angesteuert, insbesondere elektrisch angesteuert, wird.

7. Verfahren nach Anspruch 5, **dadurch gekennzeichnet, dass** die Feststellbremse-Notlöseeinrichtung (24) pneumatisch oder mechanisch angesteuert wird.

8. Verfahren nach Anspruch 6, **dadurch gekennzeichnet, dass** die Feststellbremse-Notlöseeinrichtung (24) ein bistabiles Magnetventil (24) umfasst, dessen Stellung durch Umpolung eines ihm zugeführten Stroms von der Feststellbremse-Notlösesteuereinrichtung (26) variiert wird.

## Claims

1. Parking brake device (10) for a pneumatic brake system of a utility vehicle with a control device (12), via which a parking brake actuation device (14, 16, 18) can be controlled to effect locking and release of a parking brake (20, 22), and a parking brake emergency release device (24) that serves to release the parking brake (20, 22) in the event of a parking brake actuation device (14, 16, 18) failure, **characterized in that** the parking brake emergency release device (24) can be controlled independently of the control device (12).

2. Parking brake device (10) according to claim 1, **characterized in that** the parking brake emergency release device (24) can be controlled by a parking brake emergency release control device (26), in particular in an electrical manner.

3. Parking brake device (10) according to claim 1, **characterized in that** the parking brake emergency release device (24) can be controlled in a pneumatic or mechanical manner.

4. Parking brake device (10) according to claim 2, **characterized in that** the parking brake emergency release device (24) comprises a bistable magnetic valve (24), whose position can be varied by pole reversal of a current supplied thereto.

5. Method for controlling a parking brake device (10) for a pneumatic brake system of a utility vehicle with a control device (12), via which a parking brake actuation device (14, 16, 18) is controlled to effect locking and release of a parking brake (20, 22), and a parking brake emergency release device (24) that releases the parking brake (20, 22) in the event of a parking brake actuation device (14, 16, 18) failure, **characterized in that** the parking brake emergency release device (24) is controlled independently of the control device (12).

6. Method according to claim 5, **characterized in that** the parking brake emergency release device (24) is controlled by a parking brake emergency release control device (26), in particular controlled in an electrical manner.

7. Method according to claim 5, **characterized in that** the parking brake emergency release device (24) is controlled in a pneumatic or mechanical manner.

8. Method according to claim 6, **characterized in that** the parking brake emergency release device (24) comprises a bistable magnetic valve (24), whose position is varied by pole reversal of a current supplied thereto by the parking brake emergency release control device (26).

## Revendications

1. Dispositif (10) de frein de stationnement pour un système pneumatique de freinage d'un véhicule utilitaire, comprenant un dispositif (12) de commande, par lequel un dispositif (14, 16, 18) d'actionnement du frein de stationnement peut être commandé pour provoquer un serrage et un desserrage d'un frein (20, 22) de stationnement et comprenant un dispositif (24) de desserrage d'urgence du frein de stationnement qui, lorsque le dispositif (14, 16) d'actionnement du frein de stationnement, est défaillant, sert à desserrer le frein (20, 22) de stationnement **caractérisé en ce que** le dispositif (24) de desserrage d'urgence du frein de stationnement peut être commandé indépendamment du dispositif (12) de commande.

2. Dispositif (10) de frein de stationnement suivant la revendication 1, **caractérisé en ce que** le dispositif (24) de desserrage d'urgence du frein de stationnement peut être commandé par un dispositif (26) de commande du desserrage d'urgence du frein de stationnement en pouvant notamment être commandé électriquement.

3. Dispositif (10) de frein de stationnement suivant la revendication 1, **caractérisé en ce que** le dispositif (24) de desserrage d'urgence du frein de stationnement peut être commandé pneumatiquement ou mécaniquement.

4. Dispositif (10) de frein de stationnement suivant la revendication 2, **caractérisé en ce que** le dispositif (24) de desserrage d'urgence du frein de stationnement comprend une électrovanne (24) bistable, dont la position peut être modifiée par le dispositif (26) de commande de desserrage d'urgence du frein de stationnement en inversant un courant qui lui est envoyé.

5. Procédé de commande d'un dispositif (10) de frein de stationnement pour un système pneumatique de freinage d'un véhicule automobile, comprenant un dispositif (12) de commande par lequel un dispositif (14, 16, 18) d'actionnement du frein de stationnement peut être commandé pour provoquer un serrage et un desserrage d'un frein (20, 22) de stationnement et comprenant un dispositif (24) de desserrage d'urgence du frein de stationnement qui, lorsque le dispositif (14, 16, 18) d'actionnement du frein de stationnement est défaillant, desserre le frein (20, 22) de stationnement, **caractérisé en ce que** le dispositif (24) de desserrage d'urgence du frein de stationnement est commandé indépendamment du dispositif (12) de commande.

6. Procédé suivant la revendication 5, **caractérisé en ce que** le dispositif (4) de desserrage d'urgence du frein de stationnement est commandé par un dispositif (26) de commande du desserrage d'urgence du frein de stationnement, en étant commandé, notamment, électriquement.

7. Procédé suivant la revendication 5, **caractérisé en ce que** le dispositif (24) de desserrage d'urgence du frein de stationnement est commandé pneumatiquement ou mécaniquement.

8. Procédé suivant la revendication 6, **caractérisé en ce que** le dispositif (24) de desserrage d'urgence du frein de stationnement comprend une électrovanne (24) bistable dont la position est modifiée par inversion de la polarité d'un courant qui lui est envoyé.
